# EUROPÄISCHE PATENTSCHRIFT

(11) **EP 1 627 134 B1**
(45) Veröffentlichungstag und Bekanntmachung des Hinweises auf die Patenterteilung: **02.11.2011**
(21) Anmeldenummer: 04730533.9
(22) Anmeldetag: 30.04.2004
(51) Int. Cl.: F01M 13/04

(54) **ZENTRIFUGAL- ÖLABSCHEIDER FÜR BLOW-BY-GASE EINER BRENNKRAFTMASCHINE**
CENTRIFUGAL OIL SEPARATOR FOR BLOW-BY GASES OF AN INTERNAL COMBUSTION ENGINE
SEPARATEUR CENTRIFUGE D'HUILE DESTINE AUX GAZ DE FUITE D'UN MOTEUR A COMBUSTION INTERNE

(30) Priorität: 23.05.2003 DE 10323261
(43) Veröffentlichungstag der Anmeldung: 22.02.2006
(60) Teilanmeldung: 11002670.5
(73) Patentinhaber: Daimler AG, 70327 Stuttgart (DE)
(72) Erfinder: HOFFMANN, Michael, 71384 Weinstadt (DE); RUESS, Andreas, 70184 Stuttgart (DE)
(74) Vertreter: JENSEN & SON
(86) Internationale Anmeldenummer: PCT/EP2004/004614
(87) Internationale Veröffentlichungsnummer: WO 2004/104381

(56) Entgegenhaltungen:
- DE-C- 640 225
- US-A- 1 051 017
- US-A- 2 610 788
- US-A- 2 738 779
- US-A- 4 734 030
- US-A- 5 850 764

## Beschreibung

Die Erfindung betrifft einen Zentrifugal-Ölabscheider für Blow-By-Gase einer Brennkraftmaschine gemäß dem Oberbegriff des Anspruchs 1 bzw. des Anspruchs 5.

Derartige Zentrifugal-Ölabscheider werden bei Entlüftungsvorrichtungen des Kurbelgehäuses einer Brennkraftmaschine zum Abscheiden von Öl aus einem Öl/Luft-Gemisch verwendet, welches aus dem Zylinderkopf der Brennkraftmaschine abgeleitet wird. Die Entlüftungsleitung für die von dem Öl gereinigte Luft mündet in die Luftansaugleitung der Brennkraftmaschine. Die Blow-By-Gase werden somit ständig, d.h. in allen Betriebszuständen, aus dem Kurbelraum der Brennkraftmaschine abgesaugt und in die Ansaugleitung zurück gefördert, wodurch sie einer erneuten Verbrennung in den Zylindern zugeführt werden. Durch eine solche Entlüftung der Blow-By-Gase verringert sich die Verschmutzung des Öls erheblich, wodurch sich viel längere Ölwechselintervalle ergeben können.

Ein derartiger Zentrifugal-Ölabscheider für Blow-By-Gase einer Brennkraftmaschine ist beispielsweise aus der DE 196 07 919 A1 oder der DE 199 47 143 C1 bekannt. Der in der DE 196 07 919 A1 beschriebene Zentrifugal-Ölabscheider zeichnet sich durch eine besonders effektive Ölabscheidung aus den Blow-By-Gasen aus, während der in der DE 199 47 143 C1 offenbarte Zentrifugal-Ölabscheider in einer besonders kompakten Konstruktion aufgebaut ist.

Aus der gattungsbildenden US 2 610 788 A und der US 5 850 764 A sind Zentrifugal-Ölabscheider für Blow-By-Gase einer Brennkraftmaschine mit einem rotierenden Bauelement bekannt, das wenigstens eine Einströmöffnung für die Einleitung von Blow-By-Gasen aus dem Kurbelgehäuse der Brennkraftmaschine, wenigstens eine erste Abströmöffnung für die Ableitung von Luft und wenigstens eine zweite Abströmöffnung für die Ableitung von Öl sowie eine Antriebswelle zum Drehantrieb des rotierenden Bauelements aufweist, wobei die Antriebswelle des rotierenden Bauelements über eine mechanische Kopplung mit einem von einer Kurbelwelle der Brennkraftmaschine angetriebenen Getriebe verbunden ist.

Der vorliegenden Erfindung liegt demgegenüber die Aufgabe zugrunde, einen Zentrifugal-Ölabscheider mit einem einfachen und kostengünstigen Drehantrieb seines rotierenden Bauelements bereitzustellen.

Gemäß einem ersten Aspekt der Erfindung wird diese Aufgabe durch einen Zentrifugal-Ölabscheider mit den Merkmalen des Anspruchs 1 gelöst.

Der erfindungsgemäße Zentrifugal-Ölabscheider zeichnet sich dadurch aus, dass die Antriebswelle des rotierenden Bauelements über eine mechanische Kopplung mit einem von einer Kurbelwelle der Brennkraftmaschine angetriebenen Gebtriebe verbunden ist. Der erforderliche Antrieb des Zentrifugal-Ölabscheiders wird somit im wesentlichen durch Komponenten realisiert, die ohnehin bei einer Brennkraftmaschine vorhanden sind. Der Drehantrieb des Zentrifugal-Ölabscheiders ist daher sowohl technisch als auch wirtschaftlich günstig umzusetzen.

In einer Ausgestaltung der Erfindung ist das Getriebe, mit dem die Antriebswelle des rotierenden Bauelements des Zentrifugal-Ölabscheiders gekoppelt ist, ein Zahnräderwechselgetriebe. Bei geeignet gewählter Übersetzung der mechanischen Kopplung zwischen der Antriebswelle des rotierenden Bauelements und dem Zahnräderwechselgetriebe muss lediglich eine mechanische Verbindung zu dem Zahnräderwechselgetriebe hergestellt werden, um die erforderlichen Drehzahlen der Antriebswelle des rotierenden Bauelements zu erzielen.

In einer alternativen Ausgestaltung der Erfindung ist das Getriebe ein Turbocompoundgetriebe. Der besondere Vorteil der mechanischen Kopplung der Antriebswelle des rotierenden Bauelements des Zentrifugal-Ölabscheiders mit einem Turbocompoundgetriebe besteht in dem hohen Drehzahlniveau des Turbocompoundgetriebes, weshalb im allgemeinen keine weitere Übersetzung erforderlich ist, um die für den Zentrifugal-Ölabscheider notwendigen, hohen Drehzahlen zu erreichen.

In einer weiteren Ausgestaltung der Erfindung kann zwischen der Antriebswelle des Zentrifugal-Ölabscheiders und dem Getriebe eine regelbare Kupplung vorgesehen sein, um die Drehzahl des rotierenden Bauelements des Zentrifugal-Ölabscheiders steuern zu können.

Gemäß einem zweiten Aspekt der Erfindung wird die oben genannte Aufgabe durch einen Zentrifugal-Ölabscheider mit den Merkmalen des Anspruchs 5 gelöst.

Der erfindungsgemäße Zentrifugal-Ölabscheider für Blow-By-Gase einer Brennkraftmaschine zeichnet sich dadurch aus, dass die Antriebswelle des rotierenden Bauelements mit einem hydraulischen Antrieb verbunden ist, der in eine Fluidleitung der Brennkraftmaschine integriert ist. Auch in diesem Fall werden bereits vorhandene Komponenten einer Brennkraftmaschine für den Drehantrieb der Antriebswelle des Zentrifugal-Ölabscheiders genutzt, weshalb der Zentrifugal-Ölabscheider der Erfindung technisch einfach und kostengünstig zu realisieren ist.

In einer Ausgestaltung der Erfindung ist der hydraulische Antrieb in eine zu der Brennkraftmaschine führende Kraftstoffleitung integriert. In einer alternativen Ausgestaltung der Erfindung ist der hydraulische Antrieb in einen Niederdruck-Kraftstoffkreislauf zwischen einer Kraftstoff-Förderpumpe und einer Kraftstoff-Hochdruckpumpe integriert. Es kann davon ausgegangen werden, dass die Kraftstoffpumpe in einigen Betriebszuständen der Brennkraftmaschine eine überschüssige Kraftstoffmenge fördert, deren überschüssige Energie somit für den Antrieb des Zentrifugal-Ölabscheiders verwendet werden kann, ohne eine zusätzliche Energie aufbringen zu müssen.

In einer weiteren Ausgestaltung der Erfindung kann auch bei dem Zentrifugal-Ölabscheider gemäß dem zweiten Aspekt der Erfindung zwischen der Antriebswelle und dem hydraulischen Antrieb eine regelbare Kupplung zur Steuerung der Drehzahl des rotierenden Bauelements des Zentrifugal-Ölabscheiders vorgesehen sein. Weitere Merkmale und Merkmalskombinationen ergeben sich aus der Beschreibung sowie den Zeichnungen. Konkrete Ausführungsbeispiele der Erfindung sind in den Zeichnungen vereinfacht dargestellt und in der nachfolgenden Beschreibung näher erläutert. Es zeigen:
- Fig. 1: ein stark vereinfachtes Blockschaltbild des Drehantriebs eines Zentrifugal-Ölabscheiders gemäß einem ersten Aspekt der vorliegenden Erfindung;
- Fig. 2: ein stark vereinfachtes Blockschaltbild einer alternativen Ausführungsform eines Zentrifugal-Ölabscheiders gemäß dem ersten Aspekt der vorliegenden Erfindung; und
- Fig. 3: ein stark vereinfachtes Blockschaltbild des Drehantriebs eines Zentrifugal-Ölabscheiders gemäß dem zweiten Aspekt der vorliegenden Erfindung.

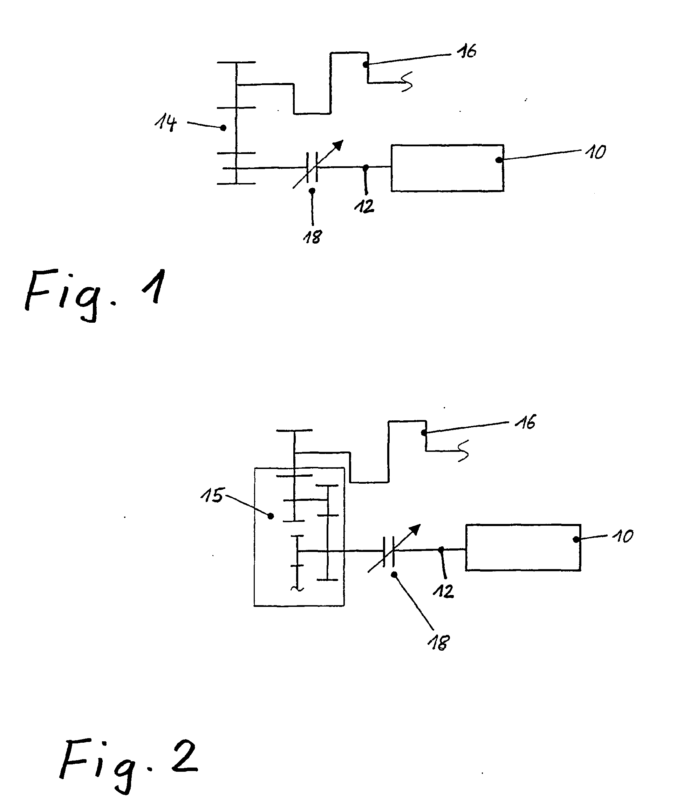

Der in Figur 1 mit der Bezugsziffer 10 gekennzeichnete Zentrifugal-Ölabscheider für Blow-By-Gase, die aus dem Kurbelgehäuse einer Brennkraftmaschine abgeleitet werden, weist ein rotierendes Bauelement auf, welches mit einer Antriebswelle 12 zum Drehantrieb versehen ist. Das rotierende Bauelement weist in üblicher Weise wenigstens eine Einströmöffnung für die Einleitung von Blow-By-Gasen aus dem Kurbelgehäuse der Brennkraftmaschine, wenigstens eine erste Abströmöffnung für die Ableitung von Luft und wenigstens eine zweite Abströmöffnung für die Ableitung von Öl auf. Es sei an dieser Stelle ausdrücklich darauf hingewiesen, dass die vorliegende Erfindung nicht auf eine spezielle Konstruktion eines Zentrifugal-Ölabscheiders beschränkt ist, sondern dass vielmehr beliebige Konstruktionen von Zentrifugal-Ölabscheidern verwendet werden können, deren rotierendes Bauelement mit einer Antriebswelle gekoppelt ist.

Die Antriebswelle 12 des rotierenden Bauelements des Zentrifugal-Ölabscheiders 10 ist in dem Ausführungsbeispiel von Figur 1 mittels einer mechanischen Kopplung (nicht dargestellt) mit einem Zahnräderwechselgetriebe 14 verbunden. Das Zahnräderwechselgetriebe 14 wird in üblicher Weise durch die Kurbelwelle 16 der Brennkraftmaschine angetrieben. Bei dem Zentrifugal-Ölabscheider 10 gemäß dem in Figur 1 dargestellten Ausführungsbeispiel ist somit lediglich eine mechanische Kopplung zu bereits bestehenden Komponenten der Brennkraftmaschine, in diesem Fall dem Zahnräderwechselgetriebe, erforderlich. Bei einer geeigneten Übersetzung der mechanischen Kopplung zwischen der Antriebswelle 12 und dem Zahnräderwechselgetriebe 14 können problemlos die erforderlichen Drehzahlen des Zentrifugal-Ölabscheiders 10 erzielt werden.

Wie in Figur 1 dargestellt, kann zwischen der Antriebswelle 12 des Zentrifugal-Ölabscheiders 10 und dem Zahnräderwechselgetriebe 14 optional eine regelbare Kupplung 18 vorgesehen sein, um die Drehzahl der Antriebswelle 12 und damit des rotierenden Bauelements des Zentrifugal-Ölabscheiders 10 zu steuern.

Figur 2 zeigt eine alternative Ausführungsform von Figur 1 für den Drehantrieb eines Zentrifugal-Ölabscheiders 10. Gleiche Komponenten bzw. Bauteile dieser alternativen Ausführungsform sind mit den gleichen Bezugsziffern wie in dem Ausführungsbeispiel von Figur 1 versehen.

Die Antriebswelle 12 des rotierenden Bauelements des Zentrifugal-Ölabscheiders 10 ist in der Ausführungsform von Figur 2 mit einem Turbocompoundgetriebe 15 über eine geeignete mechanische Kopplung verbunden. Das Turbocompoundgetriebe wird in bekannter Weise von der Kurbelwelle 16 der Brennkraftmaschine angetrieben. Die Kopplung der Antriebswelle 12 des rotierenden Bauelements des Zentrifugal-Ölabscheiders 10 mit einem Turbocompoundgetriebe 15 hat den Vorteil, dass aufgrund des hohen Drehzahlniveaus des Turbocompoundgetriebes 15 im allgemeinen keine weitere Übersetzung der mechanischen Kopplung zwischen der Antriebswelle 12 und dem Getriebe 15 erforderlich ist, um die hohen Drehzahlen des Zentrifugal-Ölabscheiders 10 zu erreichen. Auch bei dieser Ausführungsform ist es jedoch möglich, zwischen der Antriebswelle 12 des Zentrifugal-Ölabscheiders 10 und dem Turbocompoundgetriebe 15 eine regelbare Kupplung 18 zur Steuerung der Drehzahl der Antriebswelle 12 bzw. des rotierenden Bauelements des Zentrifugal-Ölabscheiders 10 vorzusehen.

Während bei den in Figuren 1 und 2 dargestellten Ausführungsbeispielen des Zentrifugal-Ölabscheiders gemäß dem ersten Aspekt der vorliegenden Erfindung die Antriebswelle des Zentrifugal-Ölabscheiders mit einem Zahnräderwechselgetriebe bzw. einem Turbocompoundgetriebe gekoppelt ist, ist die vorliegende Erfindung grundsätzlich auch für andere Getriebearten, die über die Kurbelwelle der Brennkraftmaschine angetrieben werden, anwendbar.

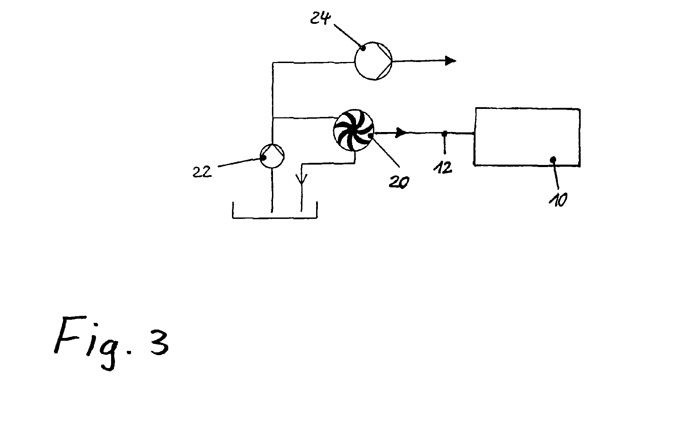

Es wird nun anhand von Figur 3 ein Drehantrieb eines Zentrifugal-Ölabscheiders gemäß dem zweiten Aspekt der vorliegenden Erfindung näher erläutert.

Der grundsätzlich beliebig aufgebaute Zentrifugal-Ölabscheider 10 weist ein rotierendes Bauelement auf, das mit einer Antriebswelle 12 verbunden ist. Ferner weist das rotierende Bauelement des Zentrifugal-Ölabscheiders wenigstens eine Einströmöffnung für die Einleitung von Blow-By-Gasen aus dem Kurbelgehäuse der Brennkraftmaschine, wenigstens eine erste Abströmöffnung für die Ableitung von Luft und wenigstens eine zweite Abströmöffnung für die Ableitung von Öl auf.

Die Antriebswelle 12 des rotierenden Bauelements des Zentrifugal-Ölabscheiders ist, wie in Figur 3 dargestellt, mit einem hydraulischen Antrieb 20 verbunden. Der hydraulische Antrieb 20 ist in eine vorhandene Fluidleitung der Brennkraftmaschine integriert, sodass auch dieser Drehantrieb des Zentrifugal-Ölabscheiders aufgrund der Verwendung bereits vorhandener Komponenten der Brennkraftmaschine technisch einfach und kostengünstig zu realisieren ist.

In dem in Figur 3 dargestellten Ausführungsbeispiel ist der hydraulische Antrieb 20 der Antriebswelle 12 des Zentrifugal-Ölabscheiders 10 in einen Niederdruck-Kraftstoffkreislauf zwischen einer Kraftstoff-Förderpumpe 22 und einer Kraftstoff-Hochdruckpumpe 24 integriert. Hierbei wird ein Teil des von der Kraftstoff-Förderpumpe geförderten Kraftstoffvolumenstroms in dem hydraulischen Antrieb 20 in Drehenergie umgesetzt und auf die Antriebswelle 12 übertragen. Als besonderer Vorteil dieser Ausführungsform des Drehantriebs des Zentrifugal-Ölabscheiders 10 kann angesehen werden, dass durch das Anbringen eines geeigneten hydraulischen Antriebs 20 in den bereits vorhandenen Kraftstoffkreislauf relativ einfach die erforderliche Drehbewegung der Antriebswelle 12 und damit des rotierenden Bauelements des Zentrifugal-Ölabscheiders 10 erreicht werden kann. Zudem ist davon auszugehen, dass die Kraftstoff-Förderpumpe 22 in einigen Betriebszuständen der Brennkraftmaschine eine überschüssige Kraftstoffmenge fördert, deren Energie somit für den Drehantrieb des Zentrifugal-Ölabscheiders 10 verwendet werden kann, ohne zusätzliche Energie aufbringen zu müssen.

In einer alternativen Ausführungsform des in Figur 3 dargestellten Drehantriebs kann der hydraulische Antrieb 20 auch direkt in eine zu der Brennkraftmaschine führende Kraftstoffleitung integriert sein. Ferner ist es auch bei dem Zentrifugal-Ölabscheider gemäß dem zweiten Aspekt der Erfindung möglich, zwischen der Antriebswelle 12 des rotierenden Bauelements des Zentrifugal-Ölabscheiders 10 und dem hydraulischen Antrieb 20 eine regelbare Kupplung (nicht dargestellt) vorzusehen, um die Drehzahl der Antriebswelle 12 des Zentrifugal-Ölabscheiders zu steuern.

## Patentansprüche

1. Zentrifugal-Ölabscheider (10) für Blow-By-Gase einer Brennkraftmaschine, mit einem rotierenden Bauelement, das wenigstens eine Einströmöffnung für die Einleitung von Blow-By-Gasen aus dem Kurbelgehäuse der Brennkraftmaschine, wenigstens eine erste Abströmöffnung für die Ableitung von Luft und wenigstens eine zweite Abströmöffnung für die Ableitung von Öl sowie eine Antriebswelle (12) zum Drehantrieb des rotierenden Bauelements aufweist, wobei die Antriebswelle (12) des rotierenden Bauelements über eine mechanische Kopplung mit einem von einer Kurbelwelle (16) der Brennkraftmaschine angetriebenen Getriebe (14, 15) verbunden ist, **dadurch gekennzeichnet, dass** zwischen der Antriebswelle (12) des Zentrifugal-Ölabscheiders (10) und dem Getriebe (14, 15) eine regelbare Kupplung (18) zur Steuerung der Drehzahl des rotierenden Bauelements des Zentrifugal-Ölabscheiders vorgesehen ist.

2. Zentrifugal-Ölabscheider nach Anspruch 1,
**dadurch gekennzeichnet,**
**dass** das Getriebe (14) ein Zahnräderwechselgetriebe ist.

3. Zentrifugal-Ölabscheider nach Anspruch 1,
**dadurch gekennzeichnet,**
**dass** das Getriebe (15) ein Turbocompoundgetriebe ist.

## Claims

1. Centrifugal oil separator (10) for blow-by gases of an internal combustion engine, comprising a rotating component having at least one inlet port for the introduction of blow-by gases from the crankcase of the internal combustion engine, at least one first outlet port for the discharge of air and at least one second outlet port for the discharge of oil, as well as a drive shaft (12) for the rotary drive of the rotating component, wherein the drive shaft (12) of the rotating component is connected via a mechanical coupling to a gearbox (14, 15) driven by a crankshaft (16) of the internal combustion engine ,
**characterised in that**
between the drive shaft (12) of the centrifugal oil separator (10) and the gearbox (14, 15), there is provided a controllable clutch (18) for the control of the speed of the rotating component of the centrifugal oil separator.

2. Centrifugal oil separator according to claim 1,
**characterised in that**
the gearbox (14) is a speed change gearbox.

3. Centrifugal oil separator according to claim 1,
**characterised in that**
the gearbox (15) is a turbo compound gearbox.

## Revendications

1. Séparateur centrifuge d'huile (10) destiné aux gaz de fuite d'un moteur à combustion interne comprenant un composant rotatif qui présente au moins un orifice d'admission destiné à l'introduction des gaz de fuite en provenance du carter de vilebrequin du moteur à combustion interne, au moins un premier orifice de sortie destiné à la sortie d'air et au moins un deuxième orifice de sortie destiné à la sortie d'huile ainsi qu'un arbre de commande (12) destiné à l'entraînement en rotation du composant rotatif, l'arbre de commande (12) du composant rotatif étant relié à un engrenage (14, 15) commandé par un vilebrequin (16) du moteur à combustion interne au moyen d'un couplage mécanique, **caractérisé en ce qu'**entre l'arbre de commande (12) du séparateur centrifuge d'huile (10) et l'engrenage (14, 15) est prévu un embrayage (18) réglable destiné à régler la vitesse de rotation du composant rotatif du séparateur centrifuge d'huile.

2. Séparateur centrifuge d'huile selon la revendication 1, **caractérisé en ce que** l'engrenage (14) est une boîte de vitesses à engrenages.

3. Séparateur centrifuge d'huile selon la revendication 1, **caractérisé en ce que** l'engrenage (15) est un engrenage turbocompound.
